# FASCICULE DE BREVET EUROPEEN

(11) **EP 0 798 176 B1**
(45) Date de publication et mention de la délivrance du brevet: **31.05.2000**
(21) Numéro de dépôt: 97400708.0
(22) Date de dépôt: 27.03.1997
(51) Int. Cl.: B60R 21/32

(54) **Dispositif de contrôle/commande du déclenchement du fonctionnement d'un module à sac gonflable intégré dans une pièce d'équipement d'un véhicule automobile**
Auslösevorrichtung für ein Airbagmodul integriert in einem Ausrüstungsstück von einem Kraftfahrzeug
Airbag deployment control apparatus integrated in an equipment module of a motor vehicle

(30) Priorité: 29.03.1996 FR 9604002
(43) Date de publication de la demande: 01.10.1997
(73) Titulaire: BERTRAND FAURE EQUIPEMENTS S.A., 92100 Boulogne (FR)
(72) Inventeur: Bak, Philippe Michel, 25700 Valentigney (FR)
(74) Mandataire: Habasque, Etienne Joel Jean-François

(56) Documents cités:
- EP-A- 0 357 225
- EP-A- 0 568 764
- WO-A-94/22693
- DE-A- 4 326 198
- DE-A- 4 341 500
- US-A- 5 413 378
- RESEARCH DISCLOSURE, no. 357, 1 Janvier 1994, EMSWORTH, GB, page 50 XP000425363 "Hardware System and Logic for a Tunable SIR System"
- ATZ AUTOMOBILTECHNISCHE ZEITSCHRIFT, vol. 97, no. 2, 1 Février 1995, STUTTGART, DE, page 107 XP000482858 "Bedarfsgerechte Auslösung"

## Description

La présente invention concerne un dispositif de contrôle/commande du déclenchement du fonctionnement d'un module à sac gonflable intégré dans une pièce d'équipement d'un véhicule automobile, selon le préambule de la revendication 1.

Plus particulièrement, ces modules à sac gonflable sont intégrés dans des pièces d'équipement de véhicules automobiles, en regard d'un siège de celui-ci équipé d'un système de ceinture de sécurité et les dispositifs de contrôle/commande de ceux-ci comportent une unité de traitement d'informations à base de calculateur, de commande du déclenchement du fonctionnement du module à sac gonflable, recevant en entrée une information de décélération du véhicule à partir d'un accéléromètre embarqué à bord de celui-ci et raccordée à des moyens de stockage d'une courbe de décélération caractéristique du véhicule, afin de déterminer l'instant de déclenchement du module à sac gonflable.

Dans l'état de la technique, cet instant de déclenchement du fonctionnement du module à sac gonflable, est déterminé pour un utilisateur standard, c'est-à-dire présentant une morphologie donnée standard, mesurant par exemple 1 mètre 75 et pesant 75 kgs et installé dans une position classique de confort sur son siège.

Le fonctionnement de l'unité de traitement d'informations est donc figé pour obtenir une protection optimale de ce type d'utilisateur en fonction des caractéristiques de décélération du véhicule qui sont propres à chaque véhicule.

Les documents US-A-5 413 378 et WO-A-94 22 693 décrivent de tels dispositifs, conformes au préambule de la revendication 1.

On conçoit cependant que ce type de dispositifs présente un certain nombre d'inconvénients, au niveau de la protection des utilisateurs ne répondant pas à ces critères standards de morphologie et/ou qui ne sont pas installés dans une position classique de confort sur le siège.

Le but de l'invention est donc de résoudre ces problèmes.

A cet effet, l'invention a pour objet un dispositif de contrôle/commande du déclenchement du fonctionnement d'un module à sac gonflable intégré dans une pièce d'équipement d'un véhicule automobile, disposé en regard d'un siège équipé d'un système de ceinture de sécurité, du type comportant une unité de traitement d'informations de commande du déclenchement du module à sac gonflable, recevant en entrée une information de décélération du véhicule à partir d'un accéléromètre embarqué à bord de celui-ci et raccordée à des moyens de stockage d'une courbe de décélération caractéristique du véhicule afin de déterminer l'instant de déclenchement du module à sac gonflable, le siège étant le siège du conducteur du véhicule, le dispositif comportant en outre des moyens de détermination de la mise en oeuvre du système de ceinture de sécurité, et des moyens de détermination de la longueur de sangle de ceinture de sécurité déroulée lorsqu'un utilisateur est en position sur le siège, caractérisé par des moyens de détermination de l'orientation des rétroviseurs du véhicule, raccordés à l'unité de traitement d'informations pour adapter l'instant de déclenchement du module à sac gonflable.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure et le fonctionnement d'un dispositif de contrôle/commande selon l'invention; et
- la Fig.2 représente différentes courbes illustrant le fonctionnement d'un dispositif de contrôle/commande selon l'invention.

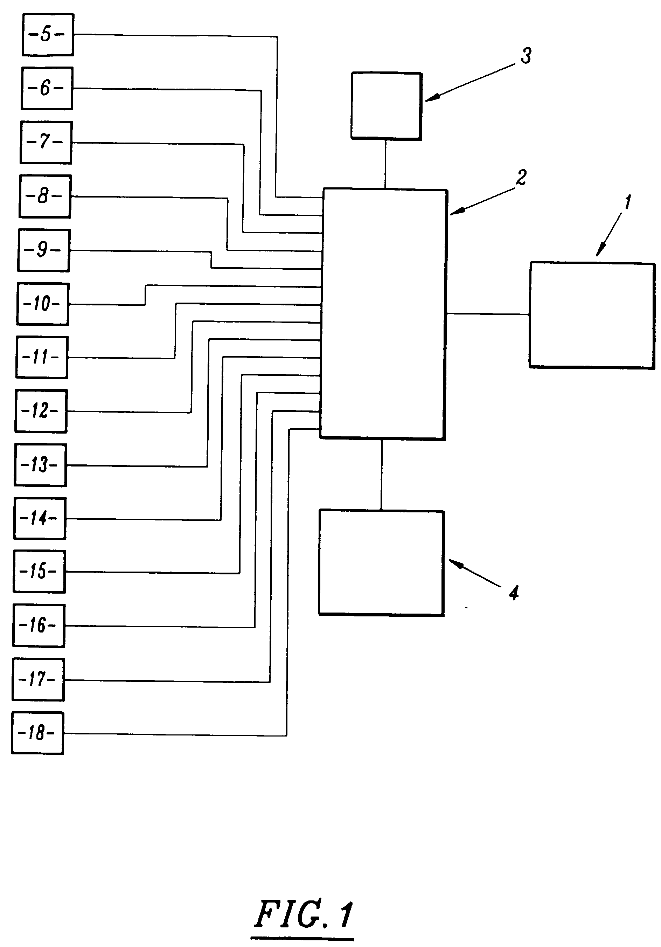

On reconnaît en effet sur la figure 1, un dispositif de contrôle/commande du déclenchement du fonctionnement d'un module à sac gonflable, désigné par la référence générale 1 sur cette figure.

Ce module à sac gonflable est intégré dans une pièce d'équipement d'un véhicule automobile.

A titre d'exemple, un tel module à sac gonflable peut être intégré dans un coussin central de volant de direction d'un ensemble de colonne de direction du véhicule, dans la planche de bord du véhicule en regard du siège du passager avant de celui-ci, dans un dossier de siège avant en regard d'un siège ou d'une banquette arrière du véhicule, ou encore dans d'autres emplacements de celui-ci.

La structure d'un tel module à sac gonflable étant bien connue dans l'état de la technique, on ne la décrira pas plus en détail par la suite.

On notera simplement qu'un tel module à sac gonflable reçoit un ordre de déclenchement en provenance d'une unité de traitement d'informations désignée par la référence générale 2 sur la figure 1, permettant de commander à un instant déterminé, le déclenchement du fonctionnement de ce module à sac gonflable consécutivement par exemple à un choc contre un obstacle.

De manière classique, une telle unité de traitement d'informations constituée par exemple de tout calculateur approprié, reçoit en entrée une information de décélération du véhicule, à partir d'un accéléromètre embarqué à bord de celui-ci et désigné par exemple par la référence générale 3 sur cette figure 1.

Par ailleurs, cette unité de traitement d'informations est également reliée à des moyens de stockage de données, constitués par toute mémoire appropriée et désignés par la référence générale 4 sur cette figure 1, permettant de stocker une courbe de décélération caractéristique du véhicule.

On sait en effet que chaque type de véhicules présente une courbe caractéristique de décélération qui est relevée lors de tests de résistance et/ou de déformation de structure aux chocs, cette courbe étant ensuite analysée et utilisée pour ce type d'applications sous forme numérique mémorisée.

On conçoit alors qu'à partir de cette courbe de décélération caractéristique du véhicule et de l'information de décélération du véhicule, délivrée par l'accéléromètre, par exemple en cas de choc du véhicule contre un obstacle quelconque, l'unité de traitement d'informations est adaptée pour déterminer l'instant de déclenchement du module à sac gonflable et pour délivrer à celui-ci l'ordre de déclenchement correspondant.

On notera également qu'une telle unité de traitement d'informations est adaptée pour, dans certains cas, interdire le déclenchement du module à sac gonflable et/ou contrôler le fonctionnement d'autres organes de sécurité du véhicule, tels que les prétensionneurs de ceintures de sécurité et les ensembles de colonnes de direction rétractables ou autres afin d'optimiser la protection des utilisateurs du véhicule.

En effet, dans certaines situations, il peut être préférable d'interdire le déclenchement de ce module à sac gonflable plutôt que de risquer de causer des blessures importantes à un utilisateur en autorisant ce déclenchement.

Par ailleurs, il a été indiqué précédemment que l'instant de déclenchement du module à sac gonflable est déterminé par l'unité de traitement d'informations pour un certain nombre de conditions figées qui sont relatives d'une part, à la courbe de décélération caractéristique du véhicule, et d'autre part, à une morphologie et à une position standards de l'utilisateur sur le siège.

Comme cela a été indiqué précédemment, ceci présente un certain nombre d'inconvénients.

Afin de résoudre ces problèmes, dans le dispositif selon l'invention, l'unité de traitement d'informations est également reliée à des moyens de détermination de la mise en oeuvre du système de ceinture de sécurité équipant le siège correspondant du véhicule, et à des moyens de détermination de la longueur de sangle de ceinture de sécurité déroulée lorsqu'un utilisateur est en position sur le siège, pour permettre à cette unité de traitement d'informations d'adapter l'instant de déclenchement du module à sac gonflable en fonction de la longueur de sangle déroulée, c'est-à-dire en fait notamment de la morphologie et de la position de l'utilisateur sur le siège.

On peut en effet considérer que la longueur de sangle de ceinture de sécurité déroulée est en quelque sorte un reflet de la morphologie de l'utilisateur et de sa position sur son siège.

Sur la figure 1, les moyens de détermination de la mise en oeuvre du système de ceinture de sécurité sont désignés par la référence générale 5.

Ces moyens de détermination peuvent présenter n'importe quelle structure appropriée, connue dans l'état de la technique et peuvent par exemple comporter un commutateur intégré dans une boucle de ceinture de sécurité correspondante, ce commutateur étant actionné lors de l'engagement d'un pène de ceinture dans cette boucle.

Bien entendu d'autres structures des moyens de détermination peuvent être envisagées.

Sur la figure 1, les moyens de détermination de la longueur de sangle de ceinture de sécurité déroulée lorsqu'un utilisateur est en position sur le siège, sont désignés par la référence générale 6. Ces moyens peuvent également présenter n'importe quelle structure appropriée et peuvent être constitués par exemple par un capteur de déroulement intégré dans l'enrouleur de sangle de ceinture de sécurité.

Comme cela sera décrit plus en détail par la suite, l'unité de traitement d'informations est adaptée pour prendre en compte ces informations afin d'adapter l'instant de déclenchement du module à sac gonflable en fonction de la longueur de sangle déroulée.

Différentes autres informations peuvent également être collectées par l'unité de traitement d'informations 2 afin d'optimiser la détermination de cet instant de déclenchement en fonction notamment de la morphologie de l'utilisateur, de la position de celui-ci sur le siège, de la configuration et de la position de ce siège et d'autres paramètres qui seront décrits plus en détail par la suite.

Ces différentes informations prises en compte par l'unité de traitement d'informations peuvent comporter:
1) la position axiale du siège dans le véhicule,
2) la hauteur du point d'ancrage haut de la ceinture de sécurité,
3) la position de l'utilisateur sur le siège,
4) la hauteur de l'assise du siège,
5) l'inclinaison du dossier du siège,
6) la position de l'appui-tête du siège,
7) la tension de la sangle de ceinture de sécurité,
8) le degré de gonflage des moyens de soutien du dos de l'utilisateur, intégrés dans le dossier du siège,
9) le poids de l'utilisateur,
10) la position de la pièce d'équipement du véhicule dans laquelle est intégré le module à sac gonflable qu'il y a lieu de commander, si la position de cette pièce peut varier, et enfin
11) par exemple dans le cas d'un siège de conducteur du véhicule, l'orientation des rétroviseurs de celui-ci.

Toutes ces informations peuvent éventuellement être utilisées par l'unité de traitement d'informations pour affiner la détermination de l'instant de déclenchement du fonctionnement du module à sac gonflable.

De plus, l'unité de traitement d'informations peut également recevoir une information relative à la présence d'un objet quelconque sur le module à sac gonflable, par exemple afin d'inhiber le déclenchement de ce module à sac gonflable, car ceci risquerait par exemple par projection de cet objet, de provoquer des blessures importantes à l'utilisateur correspondant.

Une telle situation peut également se rencontrer lorsque l'utilisateur est en appui sur ce module à sac gonflable et plus particulièrement sur la trappe escamotable lors du gonflage de celui-ci.

Une telle information peut par exemple être délivrée à l'unité de traitement d'informations par un capteur de pression intégré dans le revêtement de la trappe de recouvrement du module à sac gonflable.

Sur la figure 1, les différents moyens de détermination et capteurs correspondants ont été illustrés.

C'est ainsi par exemple qu'un capteur de tension de sangle de ceinture peut être raccordé à l'unité de traitement d'informations 2, ce capteur étant désigné par la référence générale 7 sur cette figure.

Ce capteur peut bien entendu présenter n'importe quelle structure appropriée connue dans l'état de la technique et permet à l'unité de traitement d'informations de détecter toute mauvaise utilisation de la ceinture de sécurité afin d'adapter la stratégie de commande du module à sac gonflable à une telle situation.

La position axiale du siège dans le véhicule peut être obtenue à partir de moyens de détermination désignés par la référence générale 8 sur cette figure 1 et pouvant également présenter n'importe quelle structure appropriée.

Comme cela sera décrit plus en détail par la suite, ces informations de position du siège, lorsque par exemple ce siège est un siège avant de véhicule, peuvent être utilisées pour contrôler le fonctionnement d'un module à sac gonflable intégré par exemple dans le dossier de ce siège en regard d'un siège ou d'une banquette arrière du véhicule.

La position et plus particulièrement la hauteur du point d'ancrage haut de la ceinture de sécurité, peut également être délivrée à l'unité de traitement d'informations 2 par un capteur désigné par la référence générale 9 sur cette figure 1 et pouvant présenter n'importe quelle structure appropriée.

La hauteur de l'assise du siège, l'inclinaison du dossier de celui-ci, et le degré de gonflage des moyens de soutien du dos de l'utilisateur, intégrés dans le dossier du siège, peuvent également être délivrés à l'unité de traitement d'informations 2 par l'intermédiaire de capteurs correspondants désignés par les références générales 10,11 et 12 respectivement sur cette figure.

Ces capteurs peuvent également présenter n'importe quelle structure appropriée connue dans l'état de la technique.

La position de l'appui-tête du siège peut également être délivrée à l'unité de traitement d'informations 2 par l'intermédiaire d'un capteur 13 présentant n'importe quelle structure appropriée et intégré au siège.

On notera à cet égard, qu'il existe dans l'état de la technique, des sièges à réglage dit manuel ou à réglage dit motorisé.

Dans les sièges à réglage dit motorisé, des motoréducteurs de déplacement des portions correspondantes du siège sont utilisés. Ces motoréducteurs peuvent alors être couplés à des capteurs de position pour déterminer les positions de réglage du siège. Ces informations de position mesurées sont ensuite transmises à l'unité de traitement d'informations.

Dans le cas des sièges à réglage dit manuel, il peut être nécessaire d'équiper chaque portion du siège avec des moyens de détermination de position correspondants.

Ces moyens de détermination sont bien connus dans l'état de la technique, de sorte que l'on ne les décrira pas plus en détail par la suite.

Par ailleurs, l'assise du siège par exemple peut également être équipée de moyens de détermination de la position de l'utilisateur sur le siège et de moyens de détermination du poids de celui-ci.

Ces moyens sont désignés par les références générales 14 et 15 sur cette figure 1 et comprennent par exemple tout capteur approprié de type capteur de force ou de pression intégré dans l'assise du siège de façon connue dans l'état de la technique.

Par ailleurs, il peut également être intéressant de transmettre à l'unité de traitement d'informations 2, la position de la pièce d'équipement du véhicule dans laquelle est intégré le module à sac gonflable.

Ceci est par exemple le cas de la position de l'ensemble de colonne de direction du véhicule et plus particulièrement du volant de direction de celui-ci, dans le cas où le véhicule est équipé d'un ensemble de colonne de direction réglable en position.

Ceci est également le cas lorsque des modules à sac gonflable sont intégrés par exemple dans les dossiers des sièges avant du véhicule en regard des sièges ou de la banquette arrières de celui-ci.

Dans ce cas également, un ou plusieurs capteurs de position peuvent être utilisés pour délivrer à l'unité de traitement d'informations, ces informations de position.

Un tel capteur est désigné par la référence générale 16 sur cette figure 1.

De tels capteurs, dans le cas d'une pièce d'équipement formée par un ensemble de colonne de direction, sont également directement intégrés dans cet ensemble.

On connait également dans l'état de la technique, des ensembles de colonnes de direction à réglage dit manuel ou motorisé.

Dans le cas des ensembles de colonne de direction à réglage manuel, il est tout à fait possible d'intégrer dans ceux-ci des capteurs de position permettant de délivrer à l'unité de traitement d'informations 2, les positions axiale et angulaire de cet ensemble, c'est-à-dire en fait du volant de direction.

Dans le cas des ensembles de colonne à réglage dit motorisé, ces motorisations sont en général obtenues par l'intermédiaire de motoréducteurs électriques équipés de capteurs de position.

Comme dans le cas des sièges à réglage dit motorisé, les informations de position sont alors délivrées par ces capteurs directement à l'unité de traitement d'informations.

Lorsque la pièce d'équipement est par exemple un siège avant du véhicule, les informations de position de celui-ci peuvent être délivrées par les capteurs déjà intégrés dans celui-ci, comme cela a été expliqué précédemment.

Dans le cas où le siège est un siège de conducteur du véhicule, il peut également être intéressant de délivrer à l'unité de traitement d'informations, une information relative à l'orientation des rétroviseurs du véhicule.

Une telle information d'orientation peut être délivrée à cette unité de traitement d'informations par l'intermédiaire d'un ou de plusieurs capteurs 17 prévus dans ces rétroviseurs ou dans les moyens de déplacement de ceux-ci, de façon connue.

On conçoit alors qu'il est possible de déterminer, à partir de l'orientation de ces rétroviseurs, la position privilégiée de la tête du conducteur du véhicule.

Enfin, l'unité de traitement d'informations peut également recevoir des informations relatives à la présence d'un objet par exemple sur la trappe de passage du sac gonflage lors du déclenchement du module.

Ceci est par exemple le cas si un objet quelconque est posé sur cette trappe ou si l'utilisateur est en appui sur celle-ci d'une façon ou d'une autre.

Une telle information est délivrée à l'unité de traitement d'informations par un capteur désigné par la référence générale 18 sur la figure 1 pour permettre à cette unité de détecter cet objet.

Dans ce cas, il peut être intéressant plutôt que de déclencher le fonctionnement du module à sac gonflable, d'interdire ce déclenchement afin de limiter les risques de blessures de cet utilisateur.

On conçoit alors que ces différentes informations relatives :
1) à la morphologie de l'utilisateur,
2) à la position de celui-ci sur le siège, et
3) à l'environnement du siège dans l'habitacle du véhicule,
permettent à l'unité de traitement d'informations 2 d'adapter de façon optimale, l'instant de déclenchement du module à sac gonflable et éventuellement d'interdire ce déclenchement, car celui-ci se traduirait par des risques de blessures de l'utilisateur plus importants que les effets bénéfiques apportés par le déclenchement du fonctionnement de celui-ci.

En fonction des différentes informations invoquées précédemment, l'unité de traitement d'informations 2 détermine alors une situation donnée prenant en compte les différentes informations mentionnées ci-dessus pour optimiser l'instant de déclenchement du module à sac gonflable.

Il est alors possible à l'unité de traitement d'informations d'adapter en dynamique, c'est-à-dire en tenant compte en permanence des différentes informations évoquées précédemment, l'instant de déclenchement du module à sac gonflable.

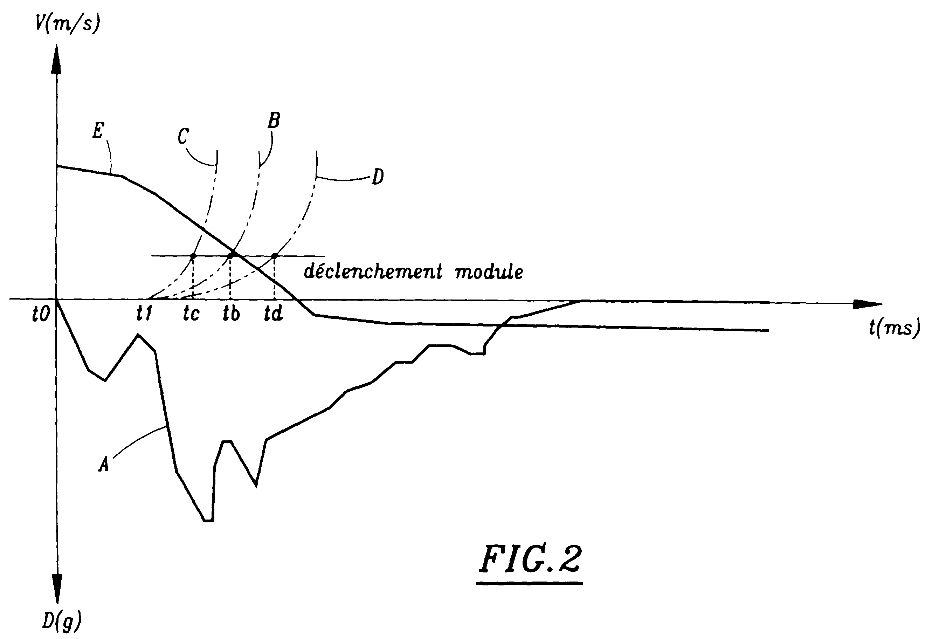

Ceci est illustré sur la figure 2 sur laquelle on a représenté, en traits pleins, une courbe caractéristique de décélération d'un véhicule donné et une courbe de vitesse de caisse du véhicule en fonction du temps à la suite d'un choc contre un obstacle quelconque.

En traits mixtes, on a représenté différentes courbes de déplacement d'un utilisateur dans différentes situations consécutivement à ce choc.

L'origine O de ces courbes est l'instant du choc du véhicule contre un obstacle quelconque.

Sur cette figure 2, la courbe A représente la courbe de décélération caractéristique du véhicule, la courbe B désigne la courbe de déplacement d'un utilisateur standard, c'est-à-dire répondant aux différents critères standards évoqués précédemment, permettant de déterminer l'instant tb de déclenchement du fonctionnement du module à sac gonflable, dans une situation standard décrite précédemment.

Sur cette figure 2, tl désigne l'instant où l'utilisateur commence à se déplacer vers l'avant consécutivement au choc.

Les courbes C et D représentent quant à elles deux courbes illustrant des déplacements d'un utilisateur dans des situations se distinguant de la situation standard illustrée par la courbe B, par au moins l'un des paramètres évoqués précédemment, c'est-à-dire par exemple par la morphologie de cet utilisateur, sa position sur le siège ou encore l'environnement de l'habitacle du véhicule.

On conçoit que dans des situations de ce type, l'utilisateur peut se déplacer plus rapidement ou plus lentement en direction du module à sac gonflable, c'est-à-dire en fait en direction de la pièce d'équipement comportant ce module et que la distance initiale, c'est-à-dire au moment du choc, séparant l'utilisateur de cette pièce, est différente et qu'il convient alors d'adapter l'instant de déclenchement du module à sac gonflable à chaque situation particulière des différents paramètres évoqués précédemment.

C'est ainsi que la courbe C illustre le déplacement d'un utilisateur de petite taille assis dans une position relativement proche du module à sac gonflable, ce qui nécessite de déclencher le fonctionnement de celui-ci à un instant tc en avance par rapport à l'instant standard tb.

Par contre, la courbe D illustre le déplacement d'un utilisateur de grande taille et de poids fort assis dans une position relativement éloignée du module à sac gonflable, ce qui nécessite de déclencher le fonctionnement du module à sac gonflable à un instant td retardé par rapport à l'instant standard tb.

Sur cette figure 2, la courbe E illustre la vitesse de la caisse du véhicule.

Chaque situation particulière est donc analysée par l'unité de traitement d'informations 2 à partir des différentes informations correspondantes disponibles, fournies par les différents moyens et capteurs décrits précédemment, pour optimiser l'instant de déclenchement du module à sac gonflable correspondant, c'est-à-dire en fait pour avancer ou retarder celui-ci par rapport à la situation standard.

Cette modulation de l'instant de déclenchement du module à sac gonflable, permet alors pour chaque situation particulière, d'obtenir une sécurité optimale de l'utilisateur en cas de choc, en tenant compte de sa morphologie, de sa position sur le siège et de la configuration de l'environnement de l'habitacle du véhicule, c'est-à-dire en fait notamment de la distance séparant la tête de l'utilisateur du module à sac gonflable au moment du choc.

## Revendications

1. Dispositif de contrôle/commande du déclenchement du fonctionnement d'un module à sac gonflable (1) intégré dans une pièce d'équipement d'un véhicule automobile, disposé en regard d'un siège équipé d'un système de ceinture de sécurité, du type comportant une unité de traitement d'informations (2) de commande du déclenchement du module à sac gonflable (1), recevant en entrée une information de décélération du véhicule à partir d'un accéléromètre (3) embarqué à bord de celui-ci et raccordée à des moyens (4) de stockage d'une courbe de décélération caractéristique du véhicule afin de déterminer l'instant de déclenchement du module à sac gonflable, le siège étant le siège du conducteur du véhicule, et le dispositif comportant en outre des moyens (5) de détermination de la mise en oeuvre du système de ceinture de securité, et des moyens (6) de détermination de la longueur de sangle de ceinture de sécurité déroulée lorsqu'un utilisateur est en position sur le siege, caractérisé par des moyens (17) de détermination de l'orientation des rétroviseurs du véhicule, raccordés à l'unité de traitement d'informations (2) pour adapter l'instant de déclenchement du module à sac gonflable (1).

2. Dispositif selon la revendication 1, caractérisé en ce qu'il comporte en outre des moyens (8) de détermination de la position axiale du siège dans le véhicule, raccordés à l'unité de traitement d'informations (2) pour adapter l'instant de déclenchement en fonction de cette position.

3. Dispositif selon la revendication 1 ou 2, caractérisé en ce qu'il comporte en outre des moyens (9) de détermination de la hauteur du point d'ancrage haut de la ceinture de sécurité raccordés à l'unité de traitement d'informations (2) pour adapter l'instant de déclenchement en fonction de cette hauteur.

4. Dispositif selon l'une quelconque des revendications précédentes, caractérisé en ce qu'il comporte en outre des moyens (14) de détermination de la position de l'utilisateur sur le siège, raccordés à l'unité de traitement d'informations (2) pour adapter l'instant de déclenchement en fonction de cette position.

5. Dispositif selon l'une quelconque des revendications précédentes, caractérisé en ce qu'il comporte en outre des moyens (10) de détermination de la hauteur de l'assise du siège, raccordés à l'unité de traitement d'informations (2) pour adapter l'instant de déclenchement en fonction de cette hauteur.

6. Dispositif selon l'une quelconque des revendications précédentes, caractérisé en ce qu'il comporte en outre des moyens (11) de détermination de l'inclinaison du dossier du siège, raccordés à l'unité de traitement d'informations (2) pour adapter l'instant de déclenchement en fonction de cette inclinaison.

7. Dispositif selon l'une quelconque des revendications précédentes, caractérisé en ce qu'il comporte des moyens (13) de détermination de la position de l'appui-tête du siège, raccordés à l'unité de traitement d'informations (2) pour adapter l'instant de déclenchement en fonction de cette position.

8. Dispositif selon l'une quelconque des revendications précédentes, caractérisé en ce qu'il comporte des moyens (7) de détermination de la tension de la sangle de ceinture de sécurité, raccordés à l'unité de traitement d'informations (2) pour adapter l'instant de déclenchement en fonction de cette tension.

9. Dispositif selon l'une quelconque des revendications précédentes, caractérisé en ce qu'il comporte des moyens (12) de détermination du degré de gonflage de moyens de soutien du dos de l'utilisateur, intégrés dans le dossier du siège, ces moyens de détermination étant raccordés à l'unité de traitement d'informations (2) pour adapter l'instant de déclenchement en fonction de ce degré de gonflage.

10. Dispositif selon l'une quelconque des informations précédentes, caractérisé en ce qu'il comporte des moyens (15) de pesée de l'utilisateur, intégrés dans l'assise du siège, et raccordés à l'unité de traitement d'informations (2) pour adapter l'instant de déclenchement en fonction du poids de l'utilisateur.

11. Dispositif selon l'une quelconque des revendications précédentes, caractérisé en ce qu'il comporte un capteur (18) de pression intégré dans le revêtement du module à sac gonflable et raccordé à l'unité de traitement d'informations (2), pour permettre à celle-ci de détecter la présence d'un objet sur le module à sac gonflable.

12. Dispositif selon l'une quelconque des revendications précédentes, caractérisé en ce qu'il comporte des moyens (16) de détermination de la position de la pièce d'équipement dans le véhicule, raccordés à l'unité de traitement d'informations (2) pour adapter l'instant de déclenchement en fonction de cette position.

## Patentansprüche

1. Kontroll-/Steuereinheit zum Auslösen der Funktion eines Airbagmoduls (1), das in ein Ausrüstungsstück eines Kraftfahrzeugs integriert ist, welche gegenüber einem mit einem Sicherheitsgurtensystem ausgestatteten Sitz angeordnet ist, bestehend aus einer Informationsbearbeitungseinheit (2) für die Steuerung der Auslösung des Airbagmoduls (1), die am Eingang eine Information über die Verzögerung des Fahrzeugs von einem Beschleunigungsmesser (3), der an Bord desselben angebracht ist, erhält und an Mittel (4) zur Speicherung einer für das Fahrzeug charakteristischen Verzögerungskurve angeschlossen ist, um den Moment der Auslösung des Airbagmoduls zu bestimmen, wobei der Sitz der Sitz des Fahrzeuglenkers ist, wobei die Vorrichtung ferner Mittel (5) zur Bestimmung des Einsatzes des Sicherheitsgurtensystems und Mittel (6) zur Bestimmung der Länge des abgerollten Sicherheitsgurtes, wenn sich ein Benutzer auf dem Sitz in Sitzposition befindet, umfaßt, gekennzeichnet durch Mittel (17) zur Bestimmung der Ausrichtung der Rückspiegel des Fahrzeugs, die an die Informationsbearbeitungseinheit (2) angeschlossen sind, um den Moment der Auslösung des Airbagmoduls (1) anzupassen.

2. Vorrichtung nach Anspruch 1, dadurch gekennzeichnet, daß sie ferner Mittel (8) zur Bestimmung der Axialposition des Sitzes in dem Fahrzeug umfaßt, die an die Informationsbearbeitungseinheit (2) angeschlossen sind, um den Moment der Auslösung in Abhängigkeit von dieser Position anzupassen.

3. Vorrichtung nach Anspruch 1 oder 2, dadurch gekennzeichnet, daß sie ferner Mittel (9) zur Bestimmung der Höhe des oberen Verankerungspunktes des Sicherheitsgurtes umfaßt, die an die Informationsbearbeitungseinheit (2) angeschlossen sind, um den Moment der Auslösung in Abhängigkeit von dieser Höhe anzupassen.

4. Vorrichtung nach einem der vorhergehenden Ansprüche, dadurch gekennzeichnet, daß sie ferner Mittel (14) zur Bestimmung der Position des Benutzers auf dem Sitz umfaßt, die an die Informationsbearbeitungseinheit (2) angeschlossen sind, um den Moment der Auslösung in Abhängigkeit von dieser Position anzupassen.

5. Vorrichtung nach einem der vorhergehenden Ansprüche, dadurch gekennzeichnet, daß sie ferner Mittel (10) zur Bestimmung der Höhe der Sitzfläche des Sitzes umfaßt, die an die Informationsbearbeitungseinheit (2) angeschlossen sind, um den Moment der Auslösung in Abhängigkeit von dieser Höhe anzupassen.

6. Vorrichtung nach einem der vorhergehenden Ansprüche, dadurch gekennzeichnet, daß sie ferner Mittel (11) zur Bestimmung der Neigung der Rückenlehne des Sitzes umfaßt, die an die Informationsbearbeitungseinheit (2) angeschlossen sind, um den Moment der Auslösung in Abhängigkeit von dieser Neigung anzupassen.

7. Vorrichtung nach einem der vorhergehenden Ansprüche, dadurch gekennzeichnet, daß sie Mittel (13) zur Bestimmung der Position der Kopfstütze des Sitzes umfaßt, die an die Informationsbearbeitungseinheit (2) angeschlossen sind, um den Moment der Auslösung in Abhängigkeit von dieser Position anzupassen.

8. Vorrichtung nach einem der vorhergehenden Ansprüche, dadurch gekennzeichnet, daß sie Mittel (7) zur Bestimmung der Spannung des Sicherheitsgurtes umfaßt, die an die Informationsbearbeitungseinheit (2) angeschlossen sind, um den Moment der Auslösung in Abhängigkeit von dieser Spannung anzupassen.

9. Vorrichtung nach einem der vorhergehenden Ansprüche, dadurch gekennzeichnet, daß sie Mittel (12) zur Bestimmung des Grades der Luftfüllung der Mittel zur Unterstützung des Rückens des Benutzers umfaßt, die in die Rückenlehne des Sitzes integriert sind, wobei diese Bestimmungsmittel an die Informationsbearbeitungseinheit (2) angeschlossen sind, um den Moment der Auslösung in Abhängigkeit von diesem Luftfüllungsgrad anzupassen.

10. Vorrichtung nach einem der vorhergehenden Ansprüche, dadurch gekennzeichnet, daß sie Mittel (15) zur Bestimmung des Gewichts des Benutzers umfaßt, die in die Sitzfläche des Sitzes integriert und an die Informationsbearbeitungseinheit (2) angeschlossen sind, um den Moment der Auslösung in Abhängigkeit von dem Gewicht des Benutzers anzupassen.

11. Vorrichtung nach einem der vorhergehenden Ansprüche, dadurch gekennzeichnet, daß sie einen Druckfühler (18) umfaßt, der in die Verkleidung des Airbagmoduls integriert und an die Informationsbearbeitungseinheit (2) angeschlossen ist, um es dieser zu ermöglichen, das Vorhandensein eines Gegenstandes auf dem Airbagmodul zu erfassen.

12. Vorrichtung nach einem der vorhergehenden Ansprüche, dadurch gekennzeichnet, daß sie Mittel (16) zur Bestimmung der Position des Ausrüstungsstückes in dem Fahrzeug umfaßt, die an die Informationsbearbeitungseinheit (2) angeschlossen sind, um den Moment der Auslösung in Abhängigkeit von dieser Position anzupassen.

## Claims

1. A device for controlling/actuating the release of operation of an inflatable bag module (1) integrated into a piece of equipment of a motor vehicle, positioned to face a seat fitted with a safety belt system, of the type comprising an information processing unit (2) for actuating the release of the inflatable bag module (1), receiving as input information on the deceleration of the vehicle from a accelerometer (3) located on board the same and connected to means (4) for storing a characteristic deceleration curve of the vehicle, in order to determine the instant of releasing the inflatable bag module, the seat being the seat of the driver of the vehicle and the device further comprising means (5) for determining that the seat belt system is in use and means (6) for determining the unrolled length of the strap of the seat belt when the user is in position on the seat, characterized by means (17) for determining the orientation of the rear-view mirror of the vehicle, connected to the information processing unit (2) to adapt the instant of release of the inflatable bag module (1).

2. A device according to claim 1, characterized in that it further comprises means (8) for determining the axial position of the seat in the vehicle, connected to the information processing unit (2) to adapt the instant of release as a function of this position.

3. A device according to claim 1 or 2, characterized in that it further comprises means (9) for determining the height of the height of the upper point of anchorage of the seat belt system, connected to the information processing unit (2) to adapt the instant of release as a function of this height.

4. A device according to any of the preceding claims, characterized in that it further comprises means (14) for determining the position of the user on the seat, connected to the information processing unit (2) to adapt the instant of release as a function of this position.

5. A device according to any of the preceding claims, characterized in that it further comprises means (10) for determining the height of the seat proper of the seat, connected to the information processing unit (2) to adapt the instant of release as a function of this height.

6. A device according to any of the preceding claims, characterized in that it further comprises means (11) for determining the inclination of the back of the seat, connected to the information processing unit (2) to adapt the instant of release as a function of this inclination.

7. A device according to any of the preceding claims, characterized in that it comprises means (13) for determining the position of the head-rest of the seat, connected to the information processing unit (2) to adapt the instant of release as a function of this position.

8. A device according to any of the preceding claims, characterized in that it comprises means (7) for determining the tension of the strap of the seat belt, connected to the information processing unit (2) to adapt the instant of release as a function of this tension.

9. A device according to any of the preceding claims, characterized in that it comprises means (12) for determining the degree of inflation of means supporting the back of the user, integrated into the back of the seat, these means for determining being connected to the information processing unit (2) to adapt the instant of release as a function of this degree of inflation.

10. A device according to any of the preceding informations [claims], characterized in that it comprises means (15) for weighing the user, integrated into the seat proper of the seat and connected to the information processing unit (2), to adapt the instant of release as a function of the weight of the user.

11. A device according to any of the preceding claims, characterized in that it comprises a pressure sensor (18) integrated into the casing of the inflatable bag module and connected to the information processing unit (2), to allow this to detect the presence of an object on the inflatable bag module.

12. A device according to any of the preceding claims, characterized in that it comprises means (16) for determining the position of the piece of equipment in the vehicle, connected to the information processing unit (2) to adapt the instant of release as a function of this position.
